(19) Europäisches Patentamt / European Patent Office / Office européen des brevets

(11) **EP 3 610 309 B1**

(12) **FASCICULE DE BREVET EUROPEEN**

(45) Date de publication et mention
de la délivrance du brevet:
**03.08.2022 Bulletin 2022/31**

(21) Numéro de dépôt: **18735357.8**

(22) Date de dépôt: **16.05.2018**

(51) Classification Internationale des Brevets (IPC):
*G02B 6/34* (2006.01)    *G02B 6/42* (2006.01)
*G02B 6/12* (2006.01)    *G02B 6/43* (2006.01)
*G02B 6/30* (2006.01)

(52) Classification Coopérative des Brevets (CPC):
**G02B 6/4214; G02B 6/34; G02B 6/4206;**
G02B 6/12002; G02B 6/12004; G02B 6/30;
G02B 6/43; G02B 2006/12061; G02B 2006/12078;
G02B 2006/12102; G02B 2006/12104;
G02B 2006/12107; G02B 2006/12121;
G02B 2006/12123; G02B 2006/12142

(86) Numéro de dépôt international:
**PCT/FR2018/051177**

(87) Numéro de publication internationale:
**WO 2018/211214 (22.11.2018 Gazette 2018/47)**

(54) **PUCE PHOTONIQUE À STRUCTURE DE COLLIMATION INTÉGRÉE**

PHOTONISCHER CHIP MIT INTEGRIERTER KOLLIMATIONSSTRUKTUR

PHOTONIC CHIP WITH INTEGRATED COLLIMATION STRUCTURE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.05.2017 FR 1754361**

(43) Date de publication de la demande:
**19.02.2020 Bulletin 2020/08**

(73) Titulaire: **Commissariat à l'Énergie Atomique
et aux Énergies Alternatives
75015 Paris (FR)**

(72) Inventeur: **MENEZO, Sylvie
38500 Voiron (FR)**

(74) Mandataire: **Brevalex
95, rue d'Amsterdam
75378 Paris Cedex 8 (FR)**

(56) Documents cités:
**EP-A1- 3 002 568**    **EP-A1- 3 159 721**
**US-A1- 2013 209 026**    **US-A1- 2016 266 322**
**US-A1- 2017 102 503**

• **STREIBL N ET AL: "Parallel optoelectronic
interconnections with high packing density
through a light-guiding plate using grating
couplers and field lenses", OPTICS
COMMUNICATIONS, ELSEVIER, AMSTERDAM,
NL, vol. 99, no. 3-4, 1 juin 1993 (1993-06-01) ,
pages 167-171, XP025827358, ISSN: 0030-4018,
DOI: 10.1016/0030-4018(93)90073-E [extrait le
1993-06-01]**

EP 3 610 309 B1

**Description**

**DOMAINE TECHNIQUE**

Le domaine de l'invention est celui de la photonique intégrée sur puce. L'invention concerne une puce photonique qui dispose d'entrée(s)/sortie(s), vers/depuis la puce, de faisceaux lumineux avec une taille de mode élargie, et potentiellement une bande spectrale élargie, pour couplage avec un dispositif extérieur, par exemple avec une autre puce photonique, une fibre optique ou un ensemble de fibres optiques, ou pour réception/émission d'un faisceau de lumière en propagation libre.

La puce photonique selon l'invention peut intégrer un ou plusieurs lasers hybrides, tel que des lasers présentant un milieu à gain réalisé en matériaux semi-conducteurs III-V sur un substrat silicium. Une telle puce est, soit destinée à fournir un peigne de longueurs d'onde émis par une pluralité de lasers hybrides à une autre puce photonique, soit destinée à émettre un faisceau de lumière en propagation libre.

**ÉTAT DE LA TECHNIQUE ANTÉRIEURE**

Les puces photoniques comprenant un circuit photonique intégré (« Photonic Integrated Circuit ») sont généralement fabriquées sur des substrats SOI (« Silicon On Insulator » pour silicium sur isolant) pour la technologie photonique silicium.

Dans ce contexte, une source de lumière hybride III-V / Silicium est formée par l'empilement sur un substrat SOI de couches III-V constituant le matériau à gain d'un laser. La lumière émise par le laser est couplée avec une structure de guidage de la lumière formée dans la couche de silicium superficielle du substrat SOI, sous-jacente aux couches III-V.

La structure de guidage de la lumière accommode les composants photoniques silicium, tels que des composants passifs (par exemple des guides d'onde, des multiplexeurs/démultiplexeurs optiques, des anneaux résonants) et des composants actifs (par exemple des modulateurs formés par des dopages P et N de la couche de silicium superficielle).

Afin de pouvoir extraire la lumière de la puce photonique en direction d'un dispositif extérieur tel qu'une fibre optique, le composant le plus couramment utilisé en photonique silicium est le réseau de couplage surfacique. Un tel réseau permet, d'une part, d'adapter la taille du mode optique se propageant dans les guides d'onde de la puce photonique à la taille du mode optique se propageant dans les fibres monomodes standards, c'est-à-dire un diamètre de 9.2$\mu$m, et, d'autre part, de passer d'une propagation guidée dans le plan de la puce photonique à une propagation en espace libre quasi-verticale au plan de la puce et du côté opposé au substrat de la puce. Ceci est obtenu en gravant un réseau du côté opposé au substrat. Un tel composant est par exemple décrit dans : « Apodized Waveguide Grating Couplers for Efficient Coupling to Optical Fibers », IEEE PHOTONICS TECHNOLOGY LETTERS, VOL. 22, NO. 15, AUGUST 1, 2010, de Xia Chen et alter.

En technologie silicium, ce composant permet ainsi de coupler la lumière d'un guide d'onde dans le plan de la puce photonique à une fibre monomode clivée faisant un angle avec la verticale, couramment d'environ 8°. Un tel composant a été proposé pour recevoir/transférer de la lumière guidée depuis/vers le guide d'onde et former/recevoir un faisceau de lumière de taille de mode égale à 9.2 $\mu$m, similaire à la taille de mode d'une fibre monomode, ce qui correspond à un couplage optimisé de lumière entre le guide d'onde silicium de la puce photonique et la fibre monomode clivée. Ses pertes sont de 1 à 4 dB optiques lorsque l'alignement géométrique entre le réseau de couplage surfacique et la fibre monomode est optimal. La tolérance d'alignement réseau-fibre, caractérisée comme le désalignement radial par rapport à l'alignement optimal qui engendre 1 dB de pertes supplémentaires, est d'environ 2 $\mu$m.

Il est également à noter que la bande passante spectrale d'un réseau de couplage surfacique (caractérisée comme la bande pour laquelle les pertes sont limitées, par exemple inférieures à 1 dB) est étroite, et généralement inférieure à 30nm. Ceci est un point très limitant par exemple dans les applications de multiplexage en longueur d'onde de type grossier (CWDM pour « Coarse Wavelength Division Multiplexing ») pour lesquelles plusieurs longueurs d'onde (par exemple quatre longueur d'ondes) espacées de 20nm doivent être multiplexées et transmises dans une unique fibre. Le signal lumineux présente dans cet exemple une bande spectrale de 4 x 20nm et les pertes aux extrémités de la bande sont alors augmentées de plusieurs dB par rapport aux pertes au centre de la bande. Dans un exemple de réalisation, les pertes de transmission d'un réseau de couplage surfacique sont de 2,7 dB à la longueur d'onde centrale 1290nm, alors qu'elles sont de 5,5 dB à la longueur d'onde 1330nm espacée de 2*20nm de la longueur d'onde centrale 1290nm.

Pour résoudre ce problème, des réseaux de couplage surfaciques relativement complexes ont été proposés qui nécessitent une couche additionnelle en nitrure de silicium structurée au-dessus de la couche de silicium structurée. On pourra se rapporter à l'article de Sacher, Wesley D., et al. initutlé "Wide bandwidth and high coupling efficiency Si3N4-on-SOI dual-level grating coupler", Optics express 22.9 (2014): 10938-10947. Par ailleurs ce type de solution ne fonctionne que pour une lumière polarisée (par exemple TE), mais aucune solution n'a été proposée permettant de coupler dans la puce photonique une lumière de polarisation quelconque.

Seules les solutions de couplage dites par la tranche de la puce (« butt coupling ») permettent d'augmenter la bande spectrale du couplage optique tout en fonctionnant pour une lumière de polarisation quelconque. Ces solutions présentent toutefois deux inconvénients majeurs :

- elles ne permettent pas un test des composants au niveau substrat : il faut en effet découper les puces du substrat (les singulariser) puis les tester par 'leur tranche' ;
- une fois couplée dans la puce, la lumière de polarisation quelconque doit être décomposée suivant les 2 polarisations TE et TM de la puce. La polarisation TM doit être tournée et transformée en polarisation TE. Cela nécessite de rajouter des circuits de gestion de la polarisation de la lumière sur la puce photonique, ces circuits ajoutant des pertes dépendantes de la longueur d'onde.

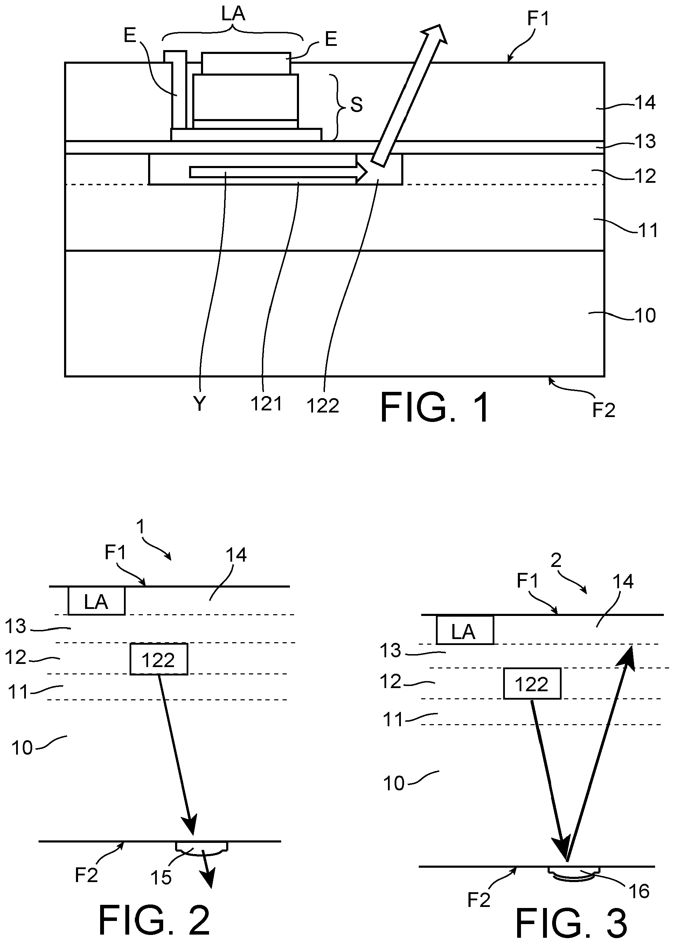

On a représenté sur la figure 1 une vue en coupe schématique d'une puce photonique intégrant une structure laser hybride à semi-conducteurs III-V sur substrat silicium sur isolant. La puce photonique comprend une couche de guidage de la lumière 12 supportée par un substrat silicium 10 et recouverte par une première couche 13, généralement en SiO2, servant d'interface de collage entre l'empilement à semi-conducteurs III-V et la couche de guidage en silicium. Cette couche 13 est optionnelle et le collage avec l'empilement III-V peut également se faire directement. La couche de guidage de la lumière 12 porte les composants photoniques (guide d'onde, réseau de couplage surfacique, modulateur PN, etc.), la fabrication desquels est réalisée au sein d'une couche de silicium sur isolant par exemple par gravure. Dans un tel cas de figure, la couche de guidage de la lumière 12 est séparée du substrat silicium 10 par une couche d'oxyde enterré 11 (BOX pour « Buried Oxide Layer »).

La puce photonique intègre un laser LA hybride à semi-conducteurs III-V sur Silicium. Le laser LA comporte une structure à gain sur la première couche 13. La structure à gain comprend un empilement S de couches de matériaux III-V dont les couches N et P sont en contact avec les électrodes E. Le laser LA est encapsulé dans une seconde couche dite d'encapsulation 14, par exemple en oxyde de silicium ou en nitrure de silicium. La couche d'encapsulation 14 comprend les électrodes E du laser ainsi que les niveaux de métal d'interconnexion électrique avec les composants actifs de la couche 12 (tels que le modulateur) de la puce photonique. Cette couche est connue sous le nom de « Back End Of Line » (BEOL) dans les procédés de fabrication utilisés en microélectronique.

La puce photonique présente ainsi une face avant F1 du côté de la couche d'encapsulation 14 et une face arrière F2 du côté du substrat 10.

La couche de guidage de la lumière 12 inclut une structure de guidage de la lumière 121 optiquement couplée au laser pour recevoir, filtrer et guider la lumière émise par celui-ci. La couche de guidage de la lumière 12 inclut également un réseau de couplage surfacique 122 configuré pour recevoir la lumière depuis la structure de guidage de la lumière 121 et former à partir de celle-ci un faisceau de lumière dirigé en direction de la face avant F1 de la puce photonique. La structure de guidage de la lumière comprend notamment un guide d'onde, ici représenté avec le réseau de couplage surfacique 122 selon une coupe longitudinale, la lumière se propageant dans ces composants dans le plan de la figure, par exemple dans la direction Y lorsqu'il s'agit ici en figure 1 d'extraire de la lumière depuis la puce photonique avec le réseau de couplage surfacique 122.

La structure de guidage de la lumière comprend ainsi les différents composants photoniques, passifs ou actifs, jusqu'au port d'entrée/sortie constitué par le réseau de couplage surfacique 122.

La couche d'encapsulation 14 comprend généralement des niveaux de métal d'interconnexion électrique de la puce photonique. Cette couche est ainsi constituée de matériaux diélectriques et de lignes gravées de métal. Une puce électronique destinée à piloter ou lire les composants photoniques actifs de la puce photonique (modulateurs, photo-détecteurs) est généralement reportée sur la face avant de la puce photonique.

Afin d'augmenter la taille de mode du faisceau optique en sortie de la puce, par exemple pour augmenter la tolérance d'alignement entre le réseau de couplage surfacique 122 et la fibre optique et rendre ainsi les opérations d'alignement moins complexes et notamment réalisables selon des techniques d'alignement passif moins coûteuses, il a été proposé dans l'article de S. Bernabé et al., "On-Board Silicon Photonics-Based Transceivers With 1-Tb/s Capacity", in IEEE Transactions on Components, Packaging and Manufacturing Technology, vol. 6, n°7, Juillet 2016, d'avoir recours à un système de deux lentilles composé d'une première lentille solidaire de la puce photonique et d'une deuxième lentille solidaire de la fibre optique. Ce système peut exploiter un connecteur à lentille dans lequel on vient insérer la fibre optique la positionnant de ce fait vis-à-vis de la deuxième lentille. La première lentille doit quant à elle être alignée avec la puce photonique de manière très précise, puis doit être solidarisée avec elle. La tolérance d'alignement entre l'ensemble puce + première lentille et l'ensemble deuxième lentille + fibre est alors augmentée à +/- 20 $\mu$m.

Afin d'élargir et de collimater une source de lumière de longueur d'onde $\lambda$ et de taille de mode Do=2*wo = 9.2 $\mu$m en sortie du réseau de couplage surfacique, la première lentille doit avoir une longueur de focale dans l'air égale à Fair= Di. ( $\pi$. wo/2$\lambda$), Di étant la taille du faisceau élargi en sortie de la première lentille. Pour obtenir un faisceau collimaté élargi avec un diamètre Di d'environ 100 $\mu$m, et en faisant par simplification l'hypothèse d'un angle de sortie du réseau de couplage surfacique par rapport à la verticale de 0°, la lentille, convexe, réalisée en verre de silice d'indice 1.45 à la longueur d'onde 1.31$\mu$m, doit présenter une épaisseur d'environ 860 $\mu$m, correspondant à une longueur de focale dans l'air d'environ 600 $\mu$m.

Il n'est pas envisageable de disposer d'une telle épaisseur de verre entre le réseau de couplage surfacique 122 et la face avant F1 de la puce photonique. En effet la couche d'encapsulation 14 présente généralement une épaisseur d'environ 3$\mu$m seulement. La lentille ne peut donc être intégrée au niveau de cette couche d'encapsulation 14 mais doit être rapportée sur la face avant de la puce photonique de manière très précise (la tolérance d'alignement étant de l'ordre de 2 $\mu$m) avant d'être solidarisée avec elle.

Cette lentille peut par exemple être solidarisée à la puce photonique au moyen de micro piliers de cuivre, l'interstice entre la lentille et la puce photonique étant comblé par une couche de remplissage en un matériau polymère. Avec un tel procédé de solidarisation, la couche de remplissage se retrouve sur le chemin optique du faisceau lumineux entre le réseau de couplage surface et la lentille. L'introduction de cette couche de matériau polymère génère des pertes supplémentaires.

Enfin la bande spectrale d'un faisceau lumineux en entrée ou en sortie d'un tel système puce photonique/ lentille est d'environ 30nm, ce qui ne permet pas d'implémenter par exemple cette solution avec un multiplexage sur une bande de 80nm de 4 longueurs d'onde de type CWDM.

La demande de brevet US 2013/209026 A1 décrit une puce photonique comprenant une couche de guidage de lumière supportée par un substrat et recouverte par une couche d'encapsulation, cette couche incluant un guide d'onde et un réseau de couplage surfacique configuré pour former un faisceau de lumière dirigé vers la face arrière du substrat en direction d'une lentille agencée au niveau de la face arrière.

## EXPOSÉ DE L'INVENTION

L'invention a pour objectif de permettre de s'affranchir de la complexe et coûteuse opération d'alignement de la lentille avec la puce photonique.

Elle propose pour ce faire une puce photonique telle que décrite à la revendication 1.

Certains aspects préférés mais non limitatifs de cette puce sont les suivants :

- le substrat est en un premier matériau diélectrique ;
- la face arrière est recouverte d'une couche d'un second matériau diélectrique d'indice effectif plus élevé que l'indice effectif du premier matériau diélectrique, et la structure de collimation réfléchissante est formée dans la couche du second matériau diélectrique ;
- le substrat est en silicium ;
- la couche de guidage de la lumière repose sur une couche en matériau diélectrique, et une couche antireflet est interposée entre le substrat et la couche en matériau diélectrique ;
- le substrat comprend une cavité d'air ou d'oxyde formée sur le trajet de la lumière entre le réseau de couplage surfacique et la structure de collimation réfléchissante ;
- le réseau de couplage surfacique présente des dents de gravure orientées vers la face arrière ;
- le réseau de couplage surfacique est conformé pour recevoir/transférer de la lumière depuis/vers la structure de guidage de la lumière et former/recevoir un faisceau de lumière de taille de mode inférieure à 6$\mu$m en direction de/depuis la structure de collimation réfléchissante ;
- la face arrière présente des motifs d'alignement avec un dispositif extérieur ;
- la structure de guidage de la lumière comprend un composant photonique actif et des interconnexions électriques raccordées au composant photonique actif sont pratiquées dans le substrat et débouchent sur la face arrière ;
- elle comprend en outre un laser intégré hybride sur silicium comprenant une structure à gain au-dessus de la couche de guidage de la lumière et couplée optiquement à la structure de guidage de la lumière.

L'invention porte également un dispositif électro-optique selon la revendication 12 et un dispositif électro-optique selon la revendication 13. Enfin, l'invention concerne un procédé de fabrication d'une puce photonique telle que décrite à la revendication 14.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1, déjà discutée précédemment, est une coupe schématique d'une puce photonique intégrant une structure laser hybride à semi-conducteurs III-V sur silicium ;
- la figure 2 est une coupe schématique d'une puce photonique non couverte par l'invention revendiquée, disposant d'une structure de collimation intégrée en face arrière et d'un réseau de couplage surfacique dirigeant la lumière en direction de la structure de collimation en face arrière ;
- la figure 3 est une coupe schématique d'une puce photonique conforme à l'invention, disposant d'une structure de collimation intégrée en face arrière et d'un réseau de couplage surfacique dirigeant la lumière en direction de la structure de collimation en face arrière ;
- la figure 4 illustre le couplage d'une puce photonique conforme à la figure 2 à une autre puce photonique ;
- la figure 5a et la figure 5b illustrent deux variantes de réalisation d'une puce photonique conforme à la figure 3 ;
- la figure 6 illustre une variante de réalisation d'une puce photonique conforme à la figure 2 ;
- les figures 7a-7i illustrent un exemple de réalisation de la puce photonique de la figure 5a ;
- Les figures 8a-8e illustrent un exemple de réalisation de la puce photonique de la figure 6.

## EXPOSÉ DÉTAILLÉ DE MODES DE RÉALISATION PARTICULIERS

L'invention porte sur une puce photonique à taille de mode augmentée (en sortie ou en entrée de la puce photonique).

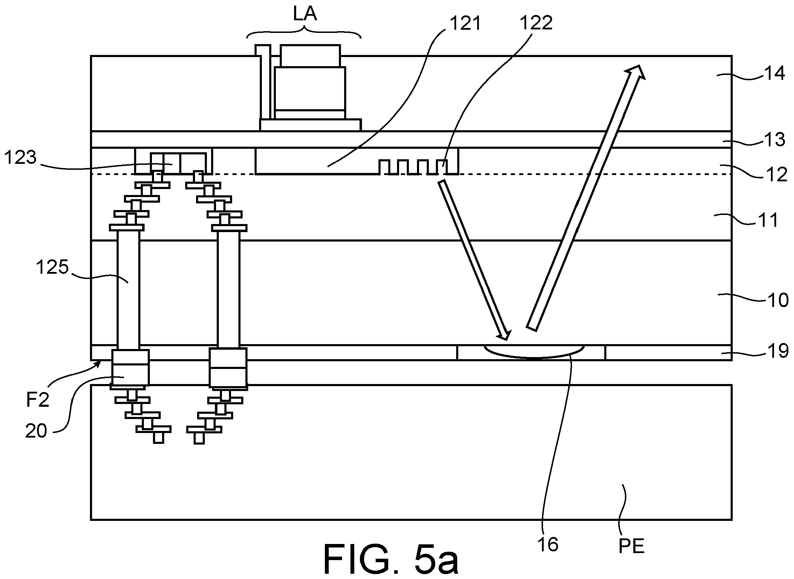

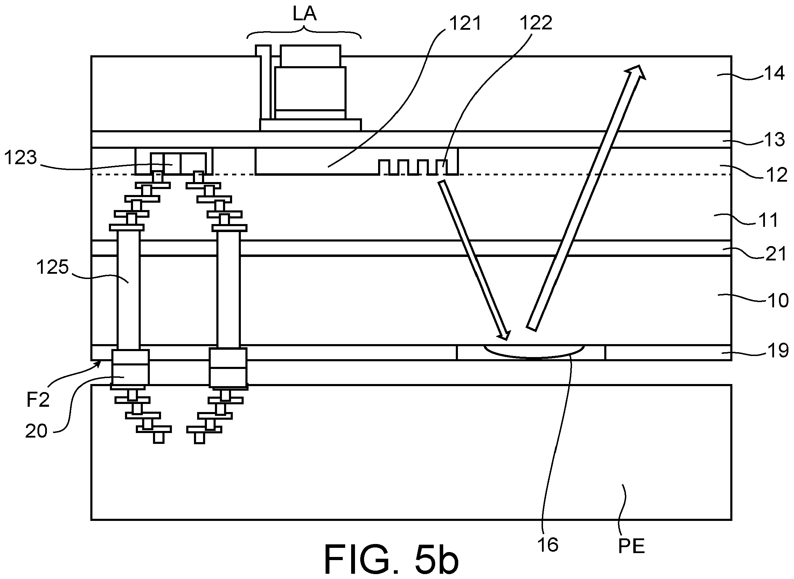

En référence aux figures 2 et 3, la puce photonique 1, 2 comprend une couche de guidage de la lumière 12 supportée par un substrat 10 et recouverte par une couche d'oxyde de silicium 13 optionnelle (servant d'interface de collage entre le substrat et l'empilement III-V laser). La couche de guidage de la lumière peut comprendre une sous-couche en silicium cristallin (le silicium du substrat SOI), ainsi qu'une sous-couche en silicium amorphe et/ou une sous-couche en nitrure de silicium. Une couche en matériau diélectrique 11, par exemple en $SiO_2$, peut être intercalée entre la couche de guidage de la lumière 12 et le substrat 10. Cette couche 11 peut également comprendre des niveaux métalliques d'interconnexion avec les composants optiques actif de la couche 12 (cf. figures 5a et 5b).

Le substrat 10 peut être un substrat de silicium. Dans un mode de réalisation possible, le substrat 10 est un substrat diélectrique, par exemple un substrat de verre, présentant l'avantage de limiter les pertes optiques à l'interface entre la couche diélectrique 11 et le substrat 10 et le cas échéant entre le substrat 10 et l'air. Dans un autre mode de réalisation possible, le substrat 10 est un substrat en silicium comportant des cavités d'air ou d'oxyde, ce mode de réalisation présentant l'avantage d'augmenter la taille de mode élargie en entrée/sortie de la puce photonique.

La puce photonique 1, 2 peut intégrer un laser LA hybride à semi-conducteurs III-V sur silicium qui comprend une structure à gain en matériaux III-V sur la couche d'interface 13, ou directement en contact avec la couche de guidage de la lumière 12. La structure à gain comprend par exemple un empilement S de couches de matériaux III-V et deux électrodes E pour la prise de contacts électriques sur la structure à gain. Le laser LA peut être encapsulé dans une seconde couche d'encapsulation 14, par exemple en oxyde de silicium, en nitrure de silicium ou dans un mélange d'oxyde de silicium et de nitrure de silicium, ou dans un polymère de type BCB. La puce photonique présente ainsi une face avant F1 du côté de la seconde couche d'encapsulation 14 et une face arrière F2 du côté du substrat 10.

La couche de guidage de la lumière comprend une structure de guidage de la lumière en silicium optiquement couplée, d'une part, au laser LA pour recevoir, filtrer et guider la lumière émise par le laser et, d'autre part, à un réseau de couplage surfacique 122. D'autres composants peuvent bien sûr être compris entre le laser et le réseau de couplage surfacique, sur le chemin de la lumière : par exemple un modulateur, et un multiplexeur en longueurs d'onde. Et d'autres composants peuvent bien sûr être présents des deux côtés du laser.

Dans le cadre de l'invention le réseau de couplage surfacique 122 est configuré pour recevoir la lumière depuis la structure de guidage de la lumière et former à partir de celle-ci un faisceau de lumière dirigé vers la face arrière F2 de la puce photonique. Cette configuration du réseau 122 permet ainsi à la lumière de traverser toute l'épaisseur du substrat 10.

La puce photonique 1, 2 comporte en outre une structure de collimation 15, 16 intégrée au niveau de la face arrière F2 et configurée pour collimater un faisceau de lumière incident sur ladite structure 15, 16 depuis le réseau de couplage surfacique 122 et en augmenter la taille de mode. Le réseau 122 est en effet configuré pour diriger le faisceau de lumière vers la structure de collimation 15, 16 intégrée au niveau de la face arrière F2.

La puce photonique à structure de collimation intégrée en face arrière est destinée à être couplée optiquement à un autre dispositif extérieur agencé en regard de la puce, par exemple une puce photonique, un dispositif comprenant une ou plusieurs fibres optiques, ce dispositif comportant au moins une entrée et/ou une sortie optique de taille de mode équivalente à la sortie de la structure de collimation 15, 16 intégrée à la puce 1, 2. Dans le cas d'un couplage avec des fibres monomodes, il s'agirait par exemple pour le dispositif extérieur de connecteurs dits « expanded beam » permettant de passer d'une taille de mode de $9.2\,\mu m$ (celle des fibres monomodes) à une taille de mode élargie à $50-100\,\mu m$.

La puce photonique à structure de collimation intégrée en face arrière peut également être utilisée pour émettre dans un milieu lorsqu'elle intègre un laser, par exemple pour des applications LIDAR (« Light Détection and Ranging »), ou recevoir dans un milieu une lumière non guidée.

Dans un premier mode de réalisation représenté sur la figure 2, non couvert par l'invention revendiquée, la structure de collimation est une lentille 15 formée sur la face arrière de la puce photonique 1, la lentille venant modifier la taille de mode de la lumière la traversant. La lentille 15 prend la forme d'un dioptre sphérique dont la calotte est formée sur la face arrière, typiquement par gravure. La lentille 15 peut également être une lentille de Fresnel. Elle peut être recouverte d'une couche anti-reflet, telle qu'une couche en nitrure de silicium d'épaisseur $\lambda/4$ où $\lambda$ est la longueur d'onde du faisceau lumineux, notamment lorsque la lentille est en silicium.

Dans un second mode de réalisation représenté sur la figure 3, couvert par l'invention revendiquée, la structure de collimation 16 est une structure réfléchissante structurée de manière à modifier la taille de mode de la lumière s'y réfléchissant. Il s'agit typiquement d'un miroir sphérique concave venant réfléchir la lumière incidente provenant du réseau de couplage surfacique 122 en direction de la face avant F1 tout en collimatant la lumière ainsi réfléchie. Une telle structure réfléchissante peut être réalisée en formant une lentille comme dans le premier mode de réalisation et en recouvrant celle-ci d'une couche métallique, par exemple une couche d'or, d'argent ou d'aluminium. La structure de collimation réfléchissante en face arrière permet de réaliser l'extraction d'un faisceau de lumière collimaté depuis la face avant de la puce.

En venant intégrer la structure de collimation à la puce photonique, l'invention permet de s'affranchir des coûteuses étapes d'alignement fin et de solidarisation de la lentille à la puce. Par structure de collimation intégrée à la puce photonique, on entend notamment le fait que ladite structure est fabriquée au niveau plaque (« wafer »), et plus particulièrement, le fait que la fabrication de ladite structure peut s'intégrer à un procédé de fabrication de la puce photonique. Il est ainsi possible de fabriquer collectivement une pluralité de structures de collimation sur la puce photonique. Une seule opération d'alignement entre la pluralité de structures de collimation 15, 16 et la pluralité de réseaux de couplage surfaciques 122 est alors nécessaire (alignement lithographique au niveau de la plaque). Il est de là possible de fabriquer plusieurs puces et leurs structures de collimation en même temps sur une même plaque, de sorte que pour une pluralité de puces, au lieu de réaliser une pluralité d'alignements, un seul alignement est nécessaire.

Par ailleurs, en venant intégrer la structure de collimation au niveau de la face arrière F2 de la puce photonique, l'invention permet d'assurer que le chemin optique entre le réseau de couplage surfacique 122 et l'extérieur présente un passage par le substrat 10. Le trajet optique entre le réseau de couplage surfacique 122 et la structure de collimation 15, 16 peut être approximé comme l'épaisseur du substrat 10 avec moins de 0,5% d'erreur. Avec un substrat de silicium 10 d'épaisseur 750 $\mu$m le diamètre du faisceau en sortie de la puce photonique peut être élargi jusqu'à environ 40$\mu$m.

Dans le mode de réalisation de la figure 3, la lentille réfléchissante 16 permet de renvoyer le faisceau collimaté vers la face avant F1. Cette configuration est particulièrement intéressante dans le cas où l'on souhaite reporter une puce électronique sur la face arrière F2 de la puce photonique. Dans ce cas, la face arrière F2 de la puce photonique n'est pas accessible, et la lentille réfléchissante 16 permet alors de récupérer le faisceau collimaté du côté de la face avant F1. Cette configuration s'avère également avantageuse en ce que les tests des composants photoniques actifs présents dans la couche de guidage de la lumière se trouvent facilités de par l'extraction du faisceau collimaté en face avant.

On observe des pertes de Fresnel lors de la traversée de l'interface entre la couche 11 et le substrat 10 : elles sont de 0,8 dB avec une couche 11 en SiO$_2$ et un substrat 10 en silicium. Afin de limiter ces pertes, dans une variante possible de l'invention, une couche antireflet (par exemple une couche de nitrure de silicium, d'épaisseur $\lambda/4$ où $\lambda$ correspond à la longueur d'onde du faisceau lumineux) est agencée entre la couche 11 et le substrat 10. Il est également possible d'adopter pour matériau de la couche 11 non pas du SiO$_2$ mais un nitrure de silicium ou un empilement d'une sous-couche de SiO2 et d'une sous-couche de nitrure de silicium. Les pertes lors de la traversée de l'interface entre la couche 11 et le substrat 10 sont ainsi inférieures à 0.5dB à la longueur d'onde 1.31$\mu$m. Par ailleurs, afin de limiter les pertes lors de la traversée de l'interface entre le substrat 10 et l'air, on préférera, notamment lorsque le substrat 10 est en silicium, adopter le second mode de réalisation à structure de collimation réfléchissante 16.

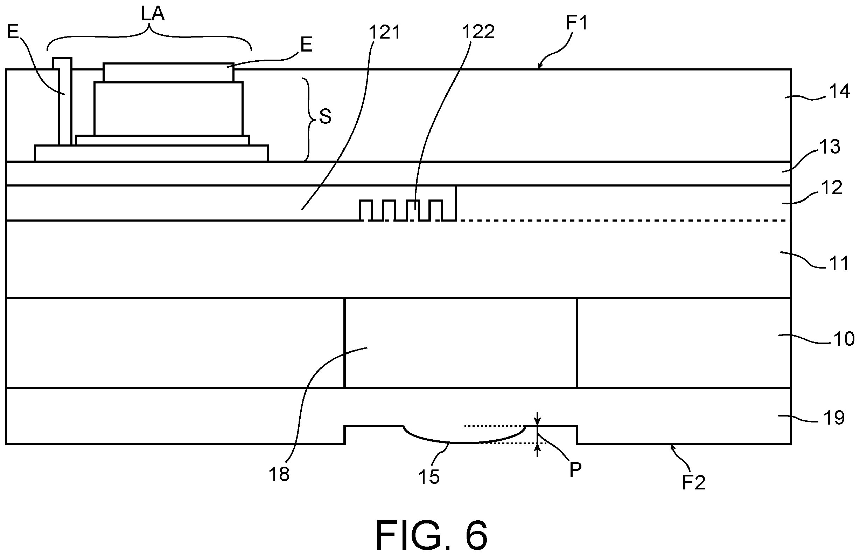

Dans une autre variante, on choisit pour substrat 10 un substrat diélectrique, par exemple un substrat de verre, typiquement en verre borosilicate. Un tel substrat diélectrique permet de supprimer les pertes optiques à l'interface couche 11-substrat 10 et de les réduire, le cas échéant, à l'interface substrat 10-air. Cette variante peut être mise en œuvre dans l'un ou l'autre des premier et second modes de réalisation. On retiendra qu'avec un substrat de verre d'épaisseur 560$\mu$m, le diamètre du faisceau en sortie de la puce photonique peut être élargi jusqu'à environ 70$\mu$m. La profondeur de sagitta P (cf. figure 6) de la structure de collimation est alors d'environ 4,6 $\mu$m pour les 2 modes de réalisation.

Dans une autre variante représentée en figure 6, on choisit pour substrat 10 un substrat, par exemple en silicium, dans lequel est formée, sur le chemin de la lumière entre le réseau de couplage surfacique 122 et la structure de collimation 15, 16, une cavité 18 d'air ou d'oxyde (respectivement par gravure ou par oxydation thermique localisées sur une surface de diamètre D du substrat 10). La structure de collimation 15, 16 est ensuite réalisée dans une couche 19 couvrant le substrat 10 du côté opposé à la face avant F1. Un tel substrat réalisé en silicium permet de conserver la conductivité thermique du silicium (par exemple à l'endroit où se trouve le laser) et de n'utiliser l'oxyde de silicium d'indice 1,45 qu'à l'endroit où se propage la lumière vers la structure de collimation.

De manière à réduire la profondeur de sagitta P de la structure de collimation 15, 16, celle-ci peut être réalisée dans une couche formée sur la face arrière de la puce photonique 1, 2 et présentant un indice effectif plus élevé que celui du substrat. On peut ainsi recourir à une couche de nitrure de silicium d'indice 2 à la longueur d'onde $1.31\mu m$, permettant de limiter la profondeur de sagitta P à environ 2 $\mu m$.

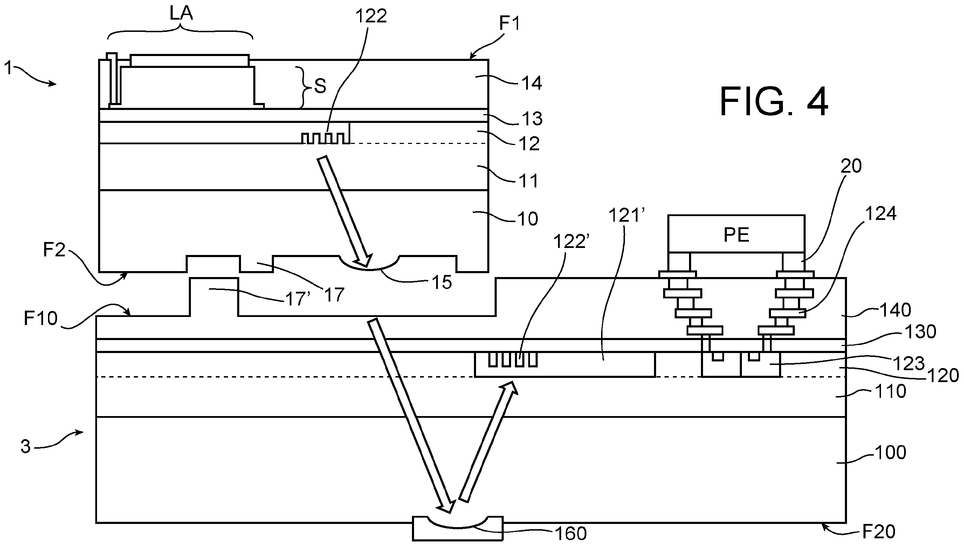

On a représenté sur la figure 4 le couplage d'une puce photonique 1 conforme à la figure 2 à une autre puce photonique 3 conforme à la figure 3. L'autre puce photonique 3 est formée sur un substrat SOI et comprend une couche de guidage de la lumière 120 recouverte d'une couche d'encapsulation 140 (comportant ici des niveaux de métal d'interconnexion) et séparée d'un substrat support 100 par une couche d'oxyde enterré en SiO2 110. Elle présente une face avant F10 du côté de la couche d'encapsulation 140 et une face arrière F20 du côté du substrat 100. Une lentille miroir 160 est intégrée au niveau de la face arrière F20. Cette lentille 160 présente les mêmes caractéristiques que la lentille 15 intégrée au niveau de la puce 1. La couche de guidage de la lumière 120 comprend un guide d'onde 121' et un réseau de couplage surfacique 122' qui est configuré pour émettre/recevoir la lumière dans la direction X, mais en direction de la face de la puce opposée à la face vers laquelle sont orientées les dents du réseau (un tel réseau peut par exemple être conçu dans une couche de silicium d'épaisseur 160nm dans laquelle les dents de gravure du réseau sont gravées sur une profondeur de 90nm).

Sans que cela ne soit exclusif de cet exemple de réalisation, la puce 1 peut présenter en face arrière F2 des motifs d'alignement 17 avec l'autre puce 3, et notamment des motifs d'alignement 17 destinés à coopérer avec des motifs complémentaires 17' en face arrière de l'autre puce par exemple pour assurer un alignement mécanique des lentilles 15 et 160 sur les faces arrière F2, F20 des deux puces 1,3.

On a par ailleurs représenté sur cette figure 4, une puce électronique PE solidarisée sur la face avant F10 de la puce photonique 3, par exemple au moyen de micro piliers de cuivre 20. La puce PE, destinée à piloter ou lire les composants photoniques actifs de la puce 3, est donc raccordée, au moyen des micro piliers de cuivre 20 et de niveaux de métal 124 traversant la couche 140, à ces composants photoniques actifs (comprenant par exemple un modulateur 123) formés dans la couche de guidage de la lumière 120.

On a représenté sur les figures 5a et 5b deux variantes de réalisation d'une puce photonique conforme à la figure 3. Ces variantes diffèrent en ce que sur la figure 5a, le substrat 10 est en matériau diélectrique, tandis que sur la figure 5b il est en matériau semiconducteur, typiquement en silicium, et séparé de la couche 11 par une couche antireflet 21. Sur ces deux figures, le substrat 10 est recouvert côté face arrière d'une couche 19 d'indice plus élevé que celui du substrat, par exemple une couche de nitrure de silicium.

Dans chacune de ces deux variantes, le réseau de couplage surfacique 122 présente des dents de gravure orientées, non pas vers la face avant mais, vers la face arrière de la puce photonique. Le couplage optique du réseau de couplage surfacique avec la structure de collimation en face arrière est ainsi plus efficace. Cette meilleure efficacité de couplage permet de ne pas avoir à recourir à l'agencement d'un miroir entre le réseau de couplage surfacique et la face avant.

On a par ailleurs représenté sur ces deux figures 5a et 5b, une puce électronique PE solidarisée sur la face arrière F2 de la puce photonique, par exemple au moyen de micro piliers de cuivre 20. Cette puce PE, destinée à piloter ou lire les composants photoniques actifs, est raccordée, notamment au moyen de vias d'interconnexion électrique 125 traversant le substrat 10, à ces composants photoniques actifs (comprenant par exemple un modulateur 123) formés dans la couche de guidage de la lumière 12.

On a représenté sur la figure 6 une variante de réalisation d'une puce photonique conforme à la figure 2. Comme précédemment indiqué, on choisit pour substrat 10 un substrat en silicium, dans lequel est formée, sur le chemin de la lumière entre le réseau de couplage surfacique 122 et la structure de collimation (ici une lentille 15), une cavité 18 d'air ou d'oxyde. La lentille 15 est ensuite réalisée dans une couche 19 couvrant le substrat 10 du côté opposé à la face avant F1.

Dans une variante de réalisation préférentielle de l'invention, permettant d'obtenir une puce photonique avec entrées/ sorties de faisceaux lumineux non seulement à taille de mode élargie mais également à bande spectrale élargie, le réseau de couplage surfacique 122 est conçu pour être adapté à une taille de mode (par exemple de $3\mu m$) réduite par rapport à celle d'une fibre monomode (typiquement $9,2\mu m$). Dans cette variante, le réseau de couplage surfacique est ainsi conformé pour recevoir/transférer de la lumière guidée depuis/vers la structure de guidage de la lumière 121 et former/recevoir un faisceau de lumière de taille de mode inférieure à 6 $\mu m$ en direction de/depuis la structure de collimation.

On retiendra qu'une telle conception du réseau de couplage n'est pas exclusive de la puce selon l'invention à structure de collimation intégrée en face arrière, mais peut trouver application dans toute puce photonique où un tel réseau reçoit/transfère de la lumière guidée depuis/vers un guide d'onde pour former/recevoir un faisceau de lumière à taille de mode réduite, notamment dans une puce photonique à structure de collimation intégrée ou assemblée en face avant ou arrière, et plus particulièrement dans une puce photonique intégrant un ou plusieurs lasers hybrides sur silicium ou une puce réalisant un multiplexage en longueurs d'onde.

L'équation suivante illustre la dépendance de l'angle $\theta$ d'émission de la lumière par un réseau de couplage surfacique avec la longueur d'onde $\lambda$ de la lumière : $\frac{1}{\lambda}\left[-n_{11}.sin\theta + n_{eff}\right] = \frac{1}{\Lambda}$ , où $n_{11}$ est l'indice de la couche diélectrique 11, $n_{eff}$ est l'indice effectif de la couche 12 de guidage de la lumière et $\Lambda$ est le pas du réseau. En dérivant cette équation par rapport à $\lambda$, on obtient l'équation suivante : $\frac{d\theta}{d\lambda} = \frac{1}{\Lambda}\frac{1}{n_{11}}$ .

En diminuant la taille de mode Do=2*$w_o$ visée pour le faisceau en entrée/sortie du réseau de couplage surfacique et en direction de/depuis la structure de collimation, on augmente l'ouverture numérique NA, et donc l'angle $\Phi$ du faisceau de lumière en sortie du réseau: $w_o = \lambda.\frac{\pi}{NA}$ avec $NA = n_{11}.sin\left(\frac{\Phi}{2}\right)$ . Un angle $\Phi$ élargi contiendra plus de longueurs d'onde en condition de phase. En venant disposer une lentille adaptée en regard de ce réseau, la bande spectrale du système « réseau de couplage surfacique / lentille » est considérablement élargie. Prenant l'exemple d'un réseau à taille de mode réduite à Do= $3\mu$m, la bande spectrale est ainsi élargie à environ 100nm, là où elle n'est que de 32nm pour un réseau à taille de mode standard de $9,2\mu$m.

Un réseau de couplage surfacique à taille de mode réduite se différencie physiquement d'un réseau standard en ce qu'il est moins long (dans la direction de propagation de la lumière), moins large (orthogonalement à la direction de propagation de la lumière), et en ce que la profondeur de gravure des lignes du réseau est moins importante, comme exemplifié ci-dessous à partir d'un calcul approximatif.

| Taille de mode | Longueur du réseau | Largeur du réseau | Gravure du réseau : Epaisseur de Si non gravée/ de Si gravée |
|---|---|---|---|
| Standard : $9,2\mu$m | $\tilde{}$ 30 $\mu$m | $\tilde{}$10 $\mu$m | 300nm/ 150nm |
| Réduite: 3 $\mu$m | $\tilde{}$ 10$\mu$m | $\tilde{}$3 $\mu$m | 300nm/ 50 nm |

En regard de ce réseau, le faisceau lumineux de bande spectrale élargie traversant un substrat 10 en Silicium de $750\mu$m d'épaisseur peut être collimaté et présenter une taille de mode de $120\mu$m (au lieu de $40\mu$m en utilisant un réseau de couplage standard) au moyen d'une lentille 15, d'ouverture D=$130\mu$m, de rayon $540\mu$m et de SAG = $4\mu$m. La tolérance d'alignement de cette lentille par rapport à cette configuration du réseau de couplage surfacique est réduite, passant de +/-$2\mu$m pour un réseau de couplage surfacique de taille de mode standard de $9,2\mu$m à +/-$0.5\mu$m pour un réseau de couplage surfacique de taille de mode $3\mu$m. Une telle tolérance d'alignement réduite reste toutefois parfaitement atteignable puisque l'alignement est réalisé en lithographie.

On décrit dans ce qui suit deux exemples d'un procédé de réalisation d'une puce photonique et plus particulièrement d'une puce selon le second mode de réalisation représenté sur la figure 3 et d'une puce selon le premier mode de réalisation représenté sur la figure 6.

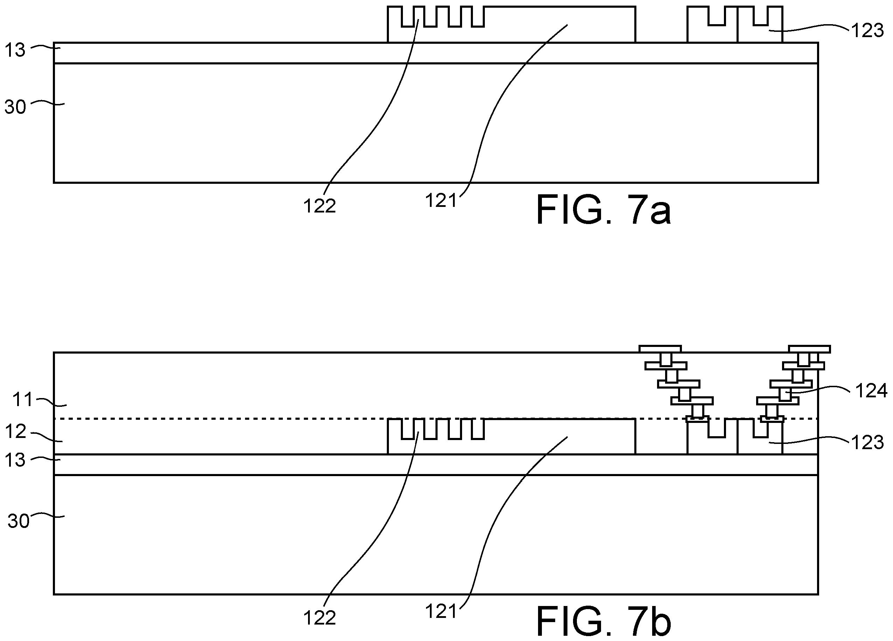

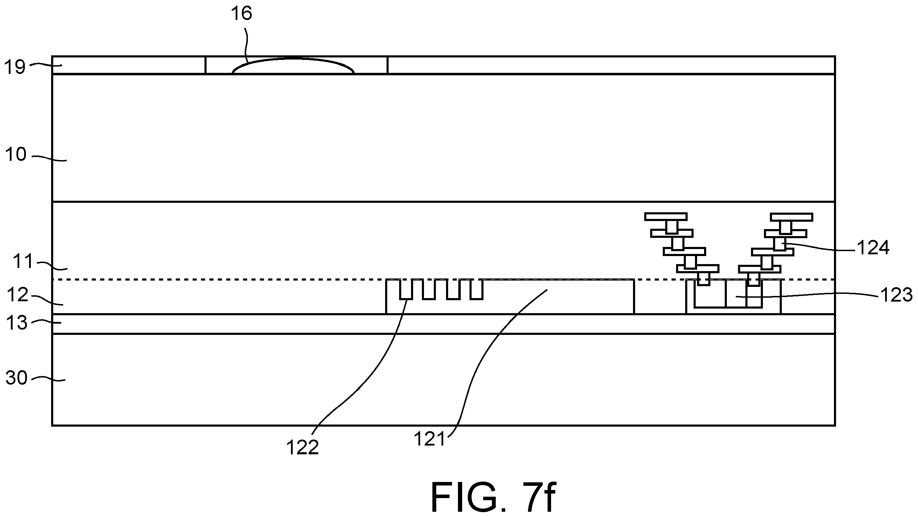

Dans le cadre du premier exemple illustré par les figures 7a-7i, le procédé débute (figure 7a) par la fourniture d'un substrat SOI présentant une couche d'oxyde enterré 13 intercalée entre une couche de silicium superficielle et un substrat de silicium 30 et par la fabrication des composants photoniques (guide d'onde 121, réseau de couplage surfacique 122, modulateur PN 123, etc.) par gravure localisée, partielle ou totale, de la couche superficielle et, implantation dans le cas du modulateur. Sur cette figure la lumière se propage perpendiculairement au plan de la figure pour le modulateur, et dans le plan de la figure pour le guide d'onde et le réseau de couplage surfacique.

On procède ensuite (figure 7b) à la formation d'une couche d'encapsulation BEOL 11 en matériaux diélectriques, cette couche comprenant des niveaux de métal d'interconnexion électrique 124 avec les composants photoniques actifs (ici le modulateur 123) de la couche de guidage de la lumière 12.

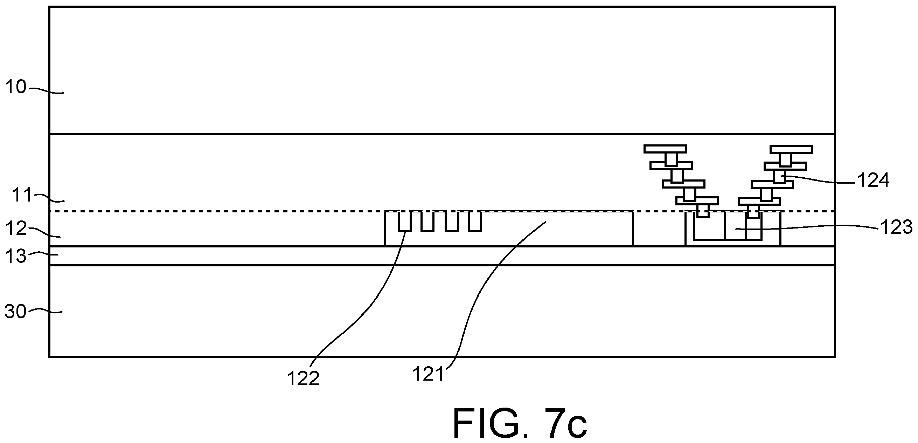

On reporte et on colle ensuite (figure 7c) un substrat 10 en matériau diélectrique, par exemple en $SiO_2$, sur la couche d'encapsulation 11. Cette étape ne nécessite pas un alignement précis lors du collage (puisque les structures de collimation ne sont pas encore réalisées). Un amincissement du substrat 10 peut être réalisé si nécessaire pour atteindre une épaisseur typiquement comprise entre $50\mu$m et $750\mu$m. Alternativement, on utilise un substrat en matériau semiconducteur, par exemple en silicium, recouvert d'une couche antireflet, laquelle vient s'interposer après collage entre le substrat et la couche d'encapsulation 11.

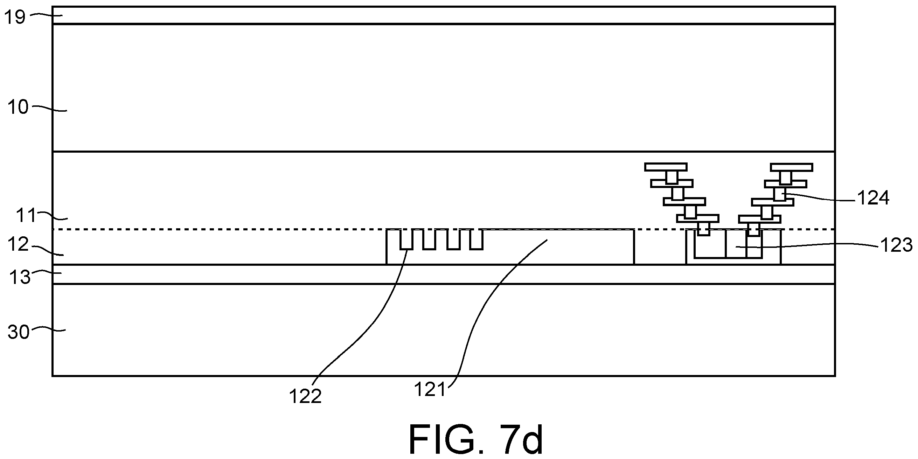

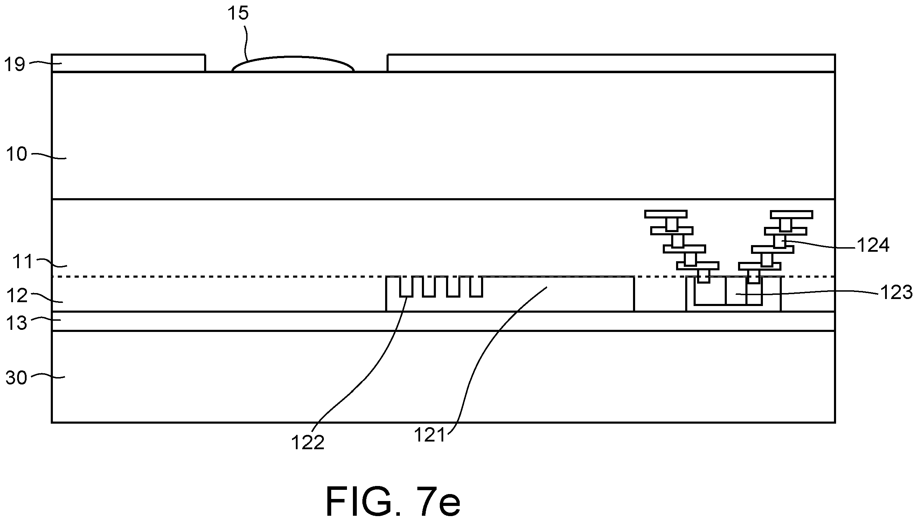

On procède ensuite (figure 7d) au dépôt d'une couche de nitrure de silicium 19 sur le substrat 10, puis à la formation d'une lentille 15 dans la couche de nitrure de silicium (figure 7e). La formation de la lentille 15 peut comprendre une gravure mécanique, par exemple un usinage laser, ou une gravure chimique sèche (dite RIE pour « Reactive Ion Etching ») pour former un dioptre sphérique en surface de la couche 19. La gravure peut être réalisée après insolation d'une résine photosensible à travers un masque pour former un bossage de résine et fluage dudit bossage. La lentille 15 peut également être fabriqué par une technique de lithographie dite « Gray tone ». On procède ensuite au dépôt d'une couche métallique sur la lentille 15 de manière à former un miroir sphérique concave 16 apte à modifier la taille de mode de la lumière s'y réfléchissant. La lentille 15 peut également être une lentille de Fresnel, notamment lorsque la profondeur de sagitta SAG est élevée, typiquement supérieure à plusieurs dizaines de $\mu$m.

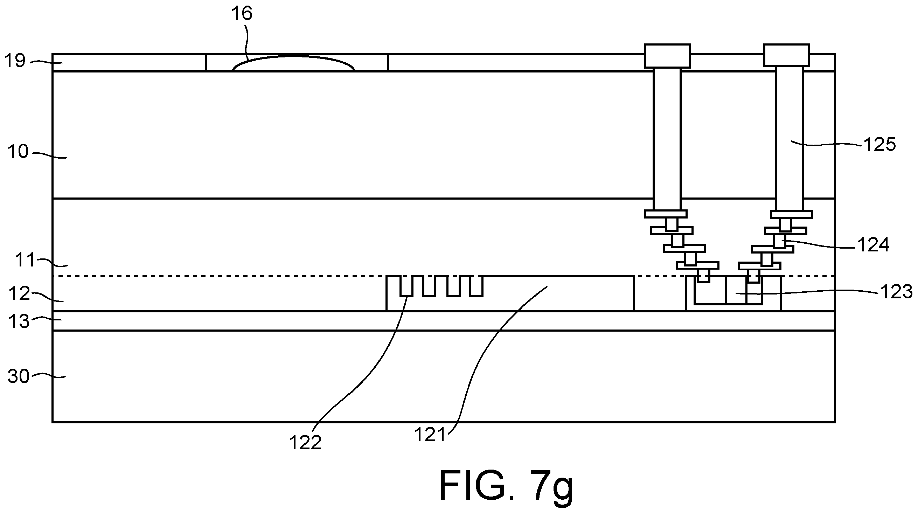

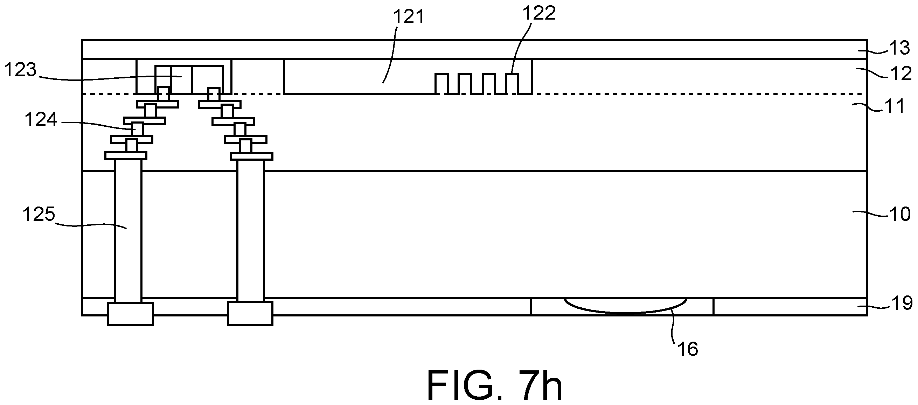

On procède (figure 7g) ensuite à la formation de vias à travers le substrat 10, par exemple par gravure laser, et au remplissage de ces vias avec un métal pour former les vias d'interconnexion électrique 125 qui, reliés à ceux 124 présents dans la couche 11, permettent de relier les composants photoniques actifs (tels que le modulateur 123) à une puce électronique. On procède ensuite au retournement de la plaque et au retrait du substrat de silicium 30 (figure 7h). Les dents de gravure du réseau de couplage surfacique 122 sont alors orientées en direction de la face arrière.

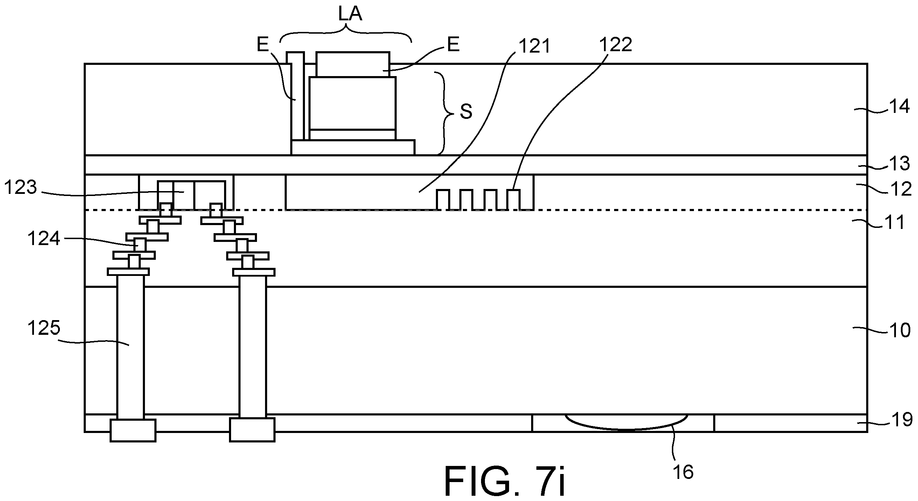

Le laser LA est ensuite fabriqué en venant réaliser un empilement S de couches III-V sur la couche 13, en structurant cet alignement pour former le milieu à gain du laser, en fabricant les électrodes E, et en formant la seconde couche d'encapsulation 14 (figure 7i).

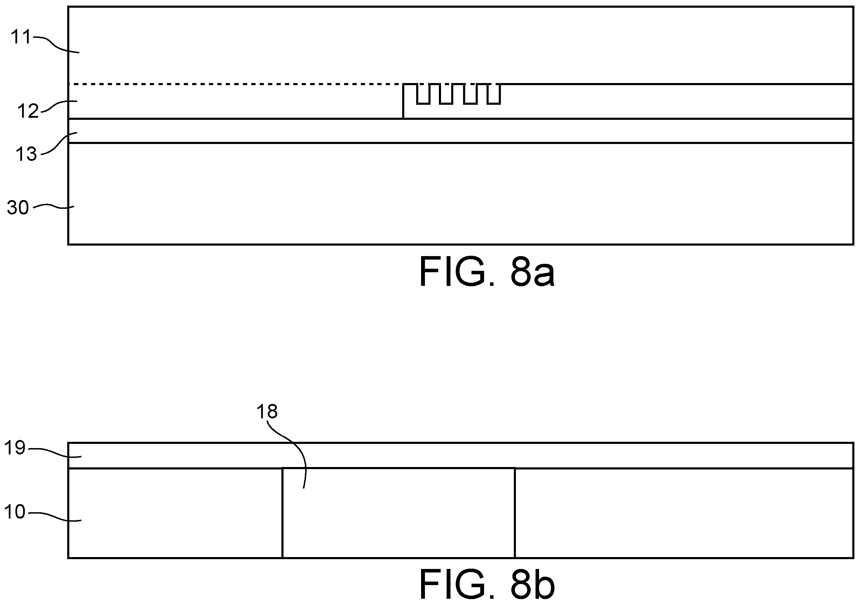

Le deuxième exemple de procédé de réalisation d'une puce photonique est illustré sur les figures 8a-8e. Ce procédé débute (figure 8a) par la fourniture d'un substrat SOI présentant une couche d'oxyde enterré 13 intercalée entre une couche de silicium superficielle et un substrat de silicium 30 et par la fabrication des composants photoniques (guide d'onde, réseau de couplage surfacique, modulateur PN, etc.) par gravure localisée, partielle ou totale, de la couche superficielle et, implantation dans le cas du modulateur. On procède ensuite à la formation d'une couche d'encapsulation BEOL 11 en matériaux diélectriques. Le procédé (figure 8b) utilise un deuxième substrat 10, par exemple en silicium, dans lequel une ou plusieurs cavités 18 d'air ou d'oxyde sont formées. Le substrat 10 est recouvert d'une couche 19 en oxyde de silicium, en nitrure de silicium ou dans un mélange d'oxyde de silicium et de nitrure de silicium. Une cavité 18 peut être formée par gravure chimique du silicium en TMAH (gravure très sélective du silicium par rapport à la couche 19 en diélectrique). Cette cavité a par exemple une dimension de 500 $\mu$m $\times$ 500$\mu$m. Elle a pour but 1) d'augmenter la focale par rapport à un substrat silicium, 2) de faciliter l'alignement lithographique de la lentille (qui est fabriquée ultérieurement dans la couche 19) avec le réseau de couplage surfacique. En effet l'alignement entre la lentille et le réseau de couplage surfacique est fait à une longueur d'onde qui est absorbée par le silicium (mais pas par le nitrure de silicium ou l'oxyde de silicium). Cet alignement est alors réalisé à l'aide de motifs d'alignement (non représentés) qui sont réalisés dans la couche de guidage de la lumière 12 qui inclut le réseau de couplage surfacique.

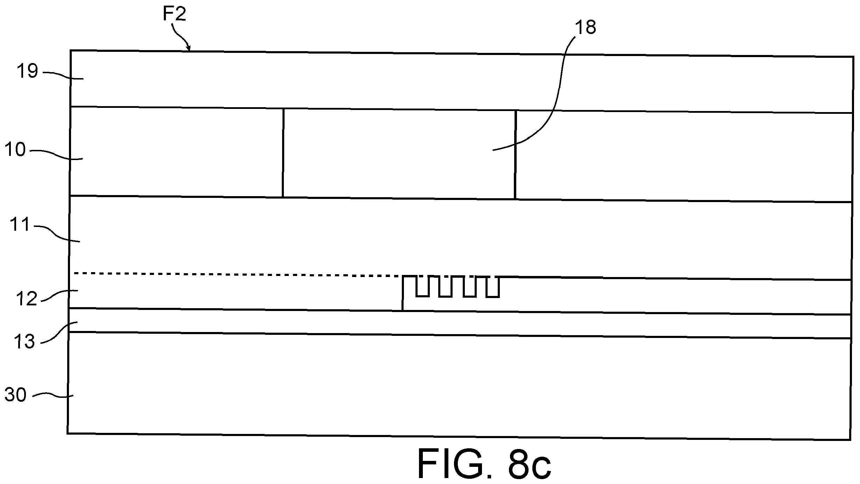

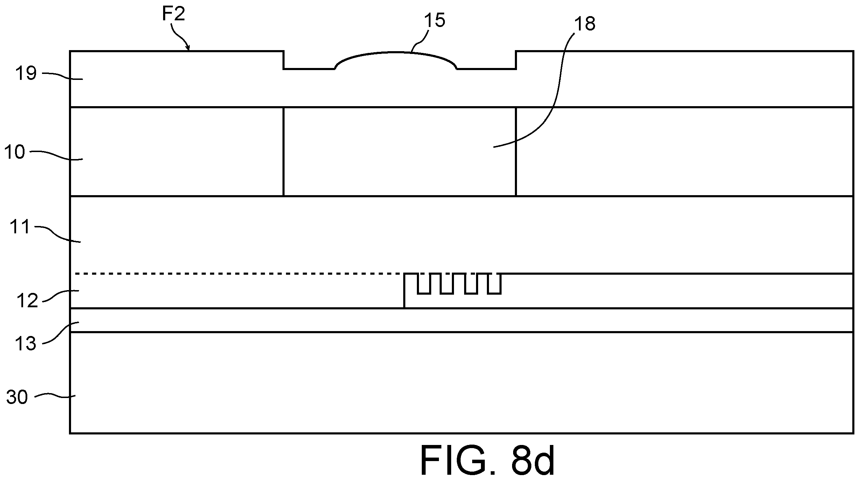

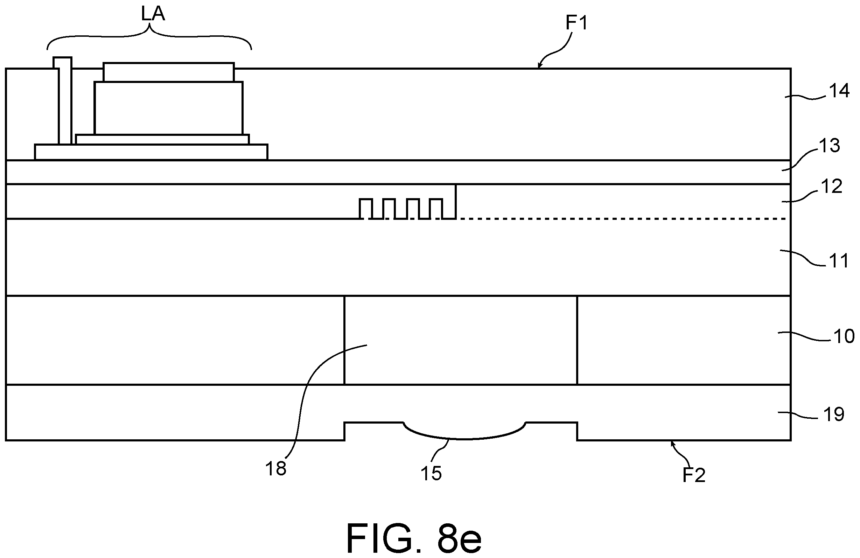

Les deux substrats sont collés (figure 8c). Une lentille est formée par gravure sèche de la couche 19 (figure 8d). On procède ensuite au retournement de la structure (les dents de gravure du réseau de couplage surfacique 122 se retrouvant alors orientées en direction de la face arrière), au retrait du substrat silicium 30 et à la fabrication du laser en venant réaliser un empilement S de couches III-V sur la couche 13, en structurant cet alignement pour former le milieu à gain du laser, en fabricant les électrodes E, et en formant la seconde couche d'encapsulation 14 (figure 8e).

Dans ce qui précède, on a décrit la réalisation de la lentille dans l'empilement formé de la couche 19 et du substrat 10 après collage du substrat 10 sur la couche 11. Il est bien entendu possible de réaliser la lentille dans l'empilement formé de la couche 19 et du substrat 10 avant collage du substrat 10 sur la couche 11. Dans un tel cas de figure, la lentille peut être alignée avec le réseau de couplage surfacique avec une précision meilleure que 1$\mu$m.

L'invention n'est pas limitée à la puce photonique, mais s'étend également à son procédé de fabrication, et notamment à un procédé de fabrication de plusieurs puces collectivement sur une même plaque. Ce procédé comprend la formation d'une structure de collimation au niveau de la face arrière de la puce et d'un réseau de couplage surfacique configuré pour recevoir de la lumière depuis une structure de guidage de la lumière et former un faisceau de lumière dirigé vers la structure de collimation.

L'invention s'étend également à un système comprenant la puce photonique selon l'invention et le dispositif extérieur doté d'une structure de collimation dont la taille de mode est adaptée à celle du faisceau lumineux en entrée/sortie de la puce photonique et qui est destinée à reconverger le faisceau sur une fibre monomode par exemple.

L'invention concerne également une telle puce photonique pouvant intégrer un ou des lasers hybrides, tel que des lasers présentant un milieu à gain réalisé en matériaux semi-conducteurs III-V sur un substrat silicium. Cette puce photonique est destinée à fournir un peigne de longueurs d'onde émis par la pluralité de lasers à une autre puce photonique ne comprenant pas de lasers (cf. figure 4 par exemple), ou bien destinée à émettre un faisceau de lumière en propagation libre.

## Revendications

1. Puce photonique (2) comprenant un substrat (10) et une couche de guidage de la lumière (12), la couche de guidage de la lumière étant supportée par le substrat (10) et incluant une structure de guidage de la lumière (121) optiquement couplée à un réseau de couplage surfacique (122), la puce photonique présentant une face avant (F1) du côté du réseau de couplage surfacique, une face arrière (F2) du côté du substrat (10) et comportant une structure de collimation (16) intégrée au niveau de la face arrière (F2) pour augmenter la taille de mode d'un faisceau de lumière incident sur ladite structure depuis le réseau de couplage surfacique et pour collimater ce faisceau, le réseau de couplage surfacique (122) étant configuré pour recevoir/transférer de la lumière depuis/vers la structure de guidage de la lumière (121) et former/recevoir un faisceau de lumière en direction de/depuis la structure de collimation (16) intégrée au niveau de la face arrière, **caractérisée en ce que** la structure de collimation (16) est une structure réfléchissante permettant de réfléchir ledit faisceau de lumière incident en direction de la face avant (F1) et de réaliser l'extraction depuis ladite face avant (F1) d'un faisceau de lumière collimaté.

2. Puce photonique (2) selon la revendication 1, dans laquelle le substrat (10) est en un premier matériau diélectrique.

3. Puce photonique selon la revendication 2, dans laquelle la face arrière (F2) est recouverte d'une couche (19) d'un second matériau diélectrique d'indice effectif plus élevé que l'indice effectif du premier matériau diélectrique, et dans laquelle la structure de collimation est formée dans la couche du second matériau diélectrique.

4. Puce photonique (2) selon la revendication 1, dans lequel le substrat (10) est en silicium.

5. Puce photonique selon la revendication 4, dans laquelle la couche de guidage de la lumière (12) repose sur une couche en matériau diélectrique (11), et dans laquelle une couche antireflet (21) est interposée entre le substrat (10) et la couche en matériau diélectrique (11).

6. Puce photonique selon la revendication 4, dans laquelle le substrat comprend une cavité (18) d'air ou d'oxyde formée sur le trajet de la lumière entre le réseau de couplage surfacique (122) et la structure de collimation réfléchissante (16).

7. Puce photonique selon l'une des revendications 1 à 6, dans lequel le réseau de couplage surfacique présente des dents de gravure orientées vers la face arrière (F2) de la puce photonique.

8. Puce photonique selon l'une des revendications 1 à 7, dans lequel le réseau de couplage surfacique est conformé pour recevoir/transférer de la lumière depuis/vers la structure de guidage de la lumière et former/recevoir un faisceau de lumière de taille de mode inférieure à 6µm en direction de/depuis la structure de collimation réfléchissante.

9. Puce photonique selon l'une des revendications 1 à 8, dans laquelle la face arrière (F2) présente des motifs d'alignement (17) avec un dispositif extérieur.

10. Puce photonique selon l'une des revendications 1 à 9, dans laquelle la structure de guidage de la lumière comprend un composant photonique actif (123) et dans laquelle des interconnexions électriques (125) raccordées au composant photonique actif sont pratiquées dans le substrat (10) et débouchent sur la face arrière.

11. Puce photonique selon l'une des revendications 1 à 10, comportant en outre un laser intégré hybride sur silicium (LA) comprenant une structure à gain (S) au-dessus de la couche de guidage de la lumière (12) et couplée optiquement à la structure de guidage de la lumière.

12. Dispositif électro-optique, comprenant une puce photonique selon la revendication 10 et une puce électronique (PE) rapportée sur la face arrière de la puce photonique et raccordée aux interconnexions électriques.

13. Dispositif électro-optique, comprenant une puce photonique selon la revendication 11 optiquement couplée à une puce photonique selon l'une quelconque des revendications 1 à 10.

14. Procédé de fabrication d'une puce photonique (2) comprenant une couche de guidage de la lumière (12) supportée par un substrat (10), la puce photonique présentant une face avant (F1) et une face arrière (F2) du côté du substrat (10), le procédé comprenant la formation d'une structure de collimation réfléchissante (16) sur la face arrière et la formation d'un réseau de couplage surfacique (122) configuré pour recevoir de la lumière depuis la structure de guidage de la lumière et former un faisceau de lumière dirigé vers la structure de collimation réfléchissante de sorte que ledit faisceau est réfléchi par la structure de collimation réfléchissante en direction de la face avant (F1), puis extrait depuis ladite face avant (F1) collimaté.

**Patentansprüche**

1. Photonischer Chip (2), der ein Substrat (10) und eine Lichtleitschicht (12) umfasst, wobei die Lichtleitschicht von dem Substrat (10) getragen wird und eine Lichtleitstruktur (121) einschließt, die optisch mit einem Oberflächen-Koppelnetzwerk (122) gekoppelt ist, wobei der photonische Chip auf der Seite des Oberflächen-Koppelnetzwerks eine Vorderfläche (F1) und auf der Seite des Substrats (10) eine Rückfläche (F2) aufweist und eine im Bereich der Rückfläche (F2) integrierte Kollimationsstruktur (16) umfasst, um die Modengröße eines Lichtstrahls, der vom Oberflächen-Koppelnetzwerk auf die Struktur fällt, zu vergrößern und um diesen Strahl zu kollimieren, wobei das Oberflächen-Koppelnetzwerk (122) so ausgelegt ist, dass es Licht von der Lichtleitstruktur (121) empfängt bzw. zu dieser überträgt und einen Lichtstrahl in Richtung der im Bereich der Rückfläche integrierten Kollimationsstruktur (16) bildet bzw. von dieser empfängt, **dadurch gekennzeichnet, dass** es sich bei der Kollimationsstruktur (16) um eine reflektierende Struktur handelt, die es ermöglicht, den einfallenden Lichtstrahl in Richtung der Vorderfläche (F1) zu reflektieren und die Extraktion eines kollimierten Lichtstrahls aus der Vorderfläche (F1) zu realisieren.

2. Photonischer Chip (2) nach Anspruch 1, wobei das Substrat (10) aus einem ersten dielektrischen Material besteht.

3. Photonischer Chip nach Anspruch 2, wobei die Rückfläche (F2) mit einer Schicht (19) aus einem zweiten dielektrischen Material mit einem höheren effektiven Index als dem effektiven Index des ersten dielektrischen Materials beschichtet ist, und wobei die Kollimationsstruktur in der Schicht des zweiten dielektrischen Materials gebildet ist.

4. Photonischer Chip (2) nach Anspruch 1, wobei das Substrat (10) aus Silicium besteht.

5. Photonischer Chip nach Anspruch 4, wobei die Lichtleitschicht (12) auf einer Schicht aus dielektrischem Material (11) ruht, und wobei zwischen dem Substrat (10) und der Schicht aus dielektrischem Material (11) eine Antireflexschicht (21) eingefügt ist.

6. Photonischer Chip nach Anspruch 4, wobei das Substrat einen Luft- oder Oxidhohlraum (18) umfasst, der in der Bahn des Lichts zwischen dem Oberflächen-Koppelnetzwerk (122) und der reflektierenden Kollimationsstruktur (16) gebildet ist.

7. Photonischer Chip nach einem der Ansprüche 1 bis 6, wobei das Oberflächen-Koppelnetzwerk Ätzzähne aufweist, die zur Rückfläche (F2) des photonischen Chips ausgerichtet sind.

8. Photonischer Chip nach einem der Ansprüche 1 bis 7, wobei das Oberflächen-Koppelnetzwerk so ausgebildet ist, dass es Licht von der Lichtleitstruktur empfängt bzw. zu dieser überträgt und einen Lichtstrahl mit einer Modengröße von weniger als 6 um in Richtung der reflektierenden Kollimationsstruktur bildet bzw. von dieser empfängt.

9. Photonischer Chip nach einem der Ansprüche 1 bis 8, wobei die Rückfläche (F2) Muster zum Ausrichten (17) mit einer externen Vorrichtung aufweist.

10. Photonischer Chip nach einem der Ansprüche 1 bis 9, wobei die Lichtleitstruktur ein aktives photonisches Bauelement (123) umfasst, und wobei elektrische Verbindungen (125), die an das aktive photonische Bauelement angeschlossen sind, im Substrat (10) hergestellt sind und an der Rückfläche münden.

11. Photonischer Chip nach einem der Ansprüche 1 bis 10, der weiter einen integrierten hybriden Laser auf Silicium (LA) umfasst, welcher eine Verstärkungsstruktur (S) umfasst, die sich oberhalb der Lichtleitschicht (12) befindet und optisch mit der Lichtleitstruktur gekoppelt ist.

12. Elektro-optische Vorrichtung, die einen photonischen Chip nach Anspruch 10 und einen elektronischen Chip (PE) umfasst, der an der Rückfläche des photonischen Chips angebracht und an die elektrischen Verbindungen angeschlossen ist.

13. Elektro-optische Vorrichtung, die einen photonischen Chip nach Anspruch 11 umfasst, der optisch mit einem photonischen Chip nach einem der Ansprüche 1 bis 10 gekoppelt ist.

14. Verfahren zur Herstellung eines photonischen Chips (2), der eine Lichtleitschicht (12) umfasst, die von einem Substrat (10) getragen wird, wobei der photonische Chip eine Vorderfläche (F1) und eine Rückfläche (F2) auf der Seite des Substrats (10) aufweist, wobei das Verfahren das Bilden einer reflektierenden Kollimationsstruktur (16) auf der Rückfläche, und das Bilden eines Oberflächen-Koppelnetzwerks (122) umfasst, das dafür ausgelegt ist, Licht von der Lichtleitstruktur zu empfangen und einen Lichtstrahl zu bilden, der zu der reflektierenden Kollimationsstruktur gerichtet ist, sodass der Strahl von der reflektierenden Kollimationsstruktur in Richtung der Vorderfläche (F1) reflektiert und anschließend kollimiert aus der Vorderfläche (F1) extrahiert wird.

**Claims**

1. Photonic chip (2) comprising a substrate (10) and a light guiding layer (12), the light guiding layer (12) being supported by the substrate (10) and including a light guiding structure (121) optically coupled with a surface coupling array (122), the photonic chip having a front face (F1) on the side of the surface coupling array, a rear face (F2) on the side of the substrate (10) and including a collimation structure (16) integrated at the level of the rear face (F2) to increase the mode size of a light beam incident on said structure from the surface coupling array and to collimate this beam, the surface coupling array (122) being configured to receive/transfer light from/to the light guiding structure (121) and form/receive a light towards/from the collimation structure (16) integrated at the level of the rear face, **characterised in that** the collimation structure (16) is a reflective structure suitable for reflecting said incident light beam towards the front face (F1) and to perform extraction from said front face (F1) of a collimated light beam.

2. Photonic chip (2) according to claim 1, wherein the substrate (10) is made of a first dielectric material.

3. Photonic chip according to claim 2, wherein the rear face (F2) is coated with a layer (19) of a second dielectric material of higher effective index than the effective index of the first dielectric material, and wherein the collimation structure is formed in the layer of the second dielectric material.

4. Photonic chip (2) according to claim 1, wherein the substrate (10) is made of silicon.

5. Photonic chip according to claim 4, wherein the light guiding layer (12) rests on a layer of dielectric material (11), and wherein an anti-reflection layer (21) is inserted between the substrate (10) and the layer of dielectric material (11).

6. Photonic chip according to claim 4, wherein the substrate comprises an air or oxide cavity (18) formed on the light path between the surface coupling array (122) and the reflective collimation structure (16).

7. Photonic chip according to one of claims 1 to 6, wherein the surface coupling array has etching teeth oriented towards the rear face (F2) of the photonic chip.

8. Photonic chip according to one of claims 1 to 7, wherein the surface coupling array is configured to receive/transfer light from/to the light guiding structure and form/receive a light beam of mode size less than $6\mu m$ towards/from the reflective collimation structure.

9. Photonic chip according to one of claims 1 to 8, wherein the rear face (F2) has alignment patterns (17) with an external device.

10. Photonic chip according to one of claims 1 to 9, wherein the light guiding structure comprises an active photonic component (123) and wherein electrical interconnections (125) connected to the active photonic component are formed in the substrate (10) and open onto the rear face.

11. Photonic chip according to one of claims 1 to 10, further comprising a hybrid silicon integrated laser (LA) comprising a gain structure (S) on top of the light guiding layer (12) and optically coupled with the light guiding structure.

12. Electro-optical device, comprising a photonic chip according to claim 10 and an electronic chip (PE) mounted on the rear face of the photonic chip and connected to the electrical interconnections.

13. Electro-optical device, comprising a photonic chip according to claim 11 optically coupled with a photonic chip according to any one of claims 1 to 10.

14. Method for manufacturing a photonic chip (2) comprising a light guiding layer (12) supported by a substrate (10), the photonic chip having a front face (F1) and a rear face (F2) on the side of the substrate (10), the method comprising the formation of a reflective collimation structure (16) on the rear face and the formation of a surface coupling array (122) configured to receive light from the light guiding structure and form a light beam directed towards the reflective collimation structure such that said beam is reflected by the reflective collimation structure towards the front face (F1) and extracted collimated from said front face (F1).

FIG. 1

FIG. 2

FIG. 3

FIG. 4

EP 3 610 309 B1

**FIG. 5a**

FIG. 5b

EP 3 610 309 B1

FIG. 6

EP 3 610 309 B1

FIG. 7a

FIG. 7b

FIG. 7c

EP 3 610 309 B1

FIG. 7d

EP 3 610 309 B1

FIG. 7e

EP 3 610 309 B1

19 —

16

10 —

11 —

12 —

13 —

30 —

124

123

122

121

FIG. 7f

FIG. 7g

EP 3 610 309 B1

FIG. 7h

EP 3 610 309 B1

FIG. 7i

EP 3 610 309 B1

FIG. 8a

FIG. 8b

FIG. 8c

EP 3 610 309 B1

FIG. 8d

EP 3 610 309 B1

LA

F1

14

13

12

11

10

19

18

15

F2

# FIG. 8e

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013209026 A1

**Littérature non-brevet citée dans la description**

- **XIA CHEN.** *IEEE PHOTONICS TECHNOLOGY LETTERS,* 01 Août 2010, vol. 22 (15
- **SACHER ; WESLEY D. et al.** Wide bandwidth and high coupling efficiency Si3N4-on-SOI dual-level grating coupler. *Optics express,* 2014, vol. 22 (9), 10938-10947
- **S. BERNABÉ et al.** On-Board Silicon Photonics-Based Transceivers With 1-Tb/s Capacity. *IEEE Transactions on Components, Packaging and Manufacturing Technology,* Juillet 2016, vol. 6 (7